# EUROPEAN PATENT APPLICATION

(11) **EP 0 957 567 A2**
(43) Date of publication of application: **17.11.1999**
(21) Application number: 99109001.0
(22) Date of filing: 06.05.1999
(51) Int. Cl.: H02K 26/00, H02P 6/08

(54) **Torque motor and drive circuit**

(30) Priority: 12.05.1998 US 76775
(71) Applicant: EATON CORPORATION, Cleveland, Ohio 44114-2584 (US)
(72) Inventor: Turner, David, Bloomfield Hills, Michigan 48304 (US)
(74) Representative: Patentanwälte Rüger, Barthelt & Abel

(57) **Abstract**

A torque motor **(10)** includes a rotor **(15)** having a plurality of magnets **(25)** arranged along an inner surface. A stator **(20)** is mounted within the rotor 15, and the rotor and stator rotate relative to each other. The stator **(20)** includes a plurality of pole shoes **(35)** which when magnetized cause the rotation of the rotor relative to the stator and the motor generates torque. A differential exists between the number of magnets **(25)** and the number of stator shoes **(35)**. With this structure, maximum torque is obtained over a large angle of rotation.

## Description

### Background of the Invention

The present invention relates to the torque motor arts. It finds particular application to a torque motor for controlling an engine throttle valve and will be described with particular reference thereto. It is to be appreciated, however, that the invention will also find application in other control systems where torque is required to control the position of a movable element.

Torque motors typically provide angular displacement or movement of a rotor by an amount proportional to the characteristics of an electrical signal applied to the motor as, for example, angular movement proportional to the applied voltage or level of current flow through the motor winding.

Torque motors have found widespread application in control systems where it is desired to rotate a shaft or member to specific position or to apply a specified amount of torque to a shaft in response to predetermined characteristics of an electrical control signal. In particular, it has been desired to utilize a torque motor to control the position of an internal combustion engine air inlet throttle valve by an electrical signal instead of directly by user movement of a mechanical throttle linkage attached to the throttle valve. The desirability of electrical engine throttle valve control has arisen in certain motor vehicle applications where it is desired to provide cruise control and/or override the user input to the throttle position control mechanism in response to the vehicle encountering extreme driving conditions or emergency situations. For example, where an antilock brake system or traction control system or yaw rate control system is employed on the vehicle, it is desired under certain conditions to have the electronic control system intervene to determine the throttle position rather than the user inputs to the accelerator pedal control.

However, it has been found that known torque motors have a prohibitive mass and manufacturing costs to be practical for high-volume passenger motor vehicle production usage. Further more, difficulties have been encountered in providing sufficient torque with minimal current draw to render a torque motor sufficiently functional for vehicle throttle control usage.

Most torque motors are limited angle devices unless a commutator is used. The limited angle is usually designed as a required actuation angle and, in most cases, torque is proportional to the applied current over the working angle. One such device is described in U.S. Patent No. 5,512,871. These types of motors have experienced difficulties in providing sufficient torque to move a valve which has been stuck, for example, by ice.

Therefore, it has been desired to provide an electrical torque motor of minimal mass yet one which provides adequate torque for vehicle engine throttle applications and which is sufficiently low in manufacturing cost to make it suitable for high-volume motor vehicle usage.

The present invention contemplates a new and improved torque motor which overcomes the above-referenced problems and others.

### Summary of the Invention

In accordance with the present invention, a new and improved torque motor is provided. A stator includes a set of stator poles circumferentially spaced and radially projecting from the stator. A coil is wound around each of the stator poles for carrying a current which magnetizes an associated stator pole. A rotor is disposed peripherally around the set of stator poles and is mounted for axial rotation relative to the stator. The rotor includes a set of magnets having a number of magnets different than a number of poles in the set of stator poles.

In accordance with a more limited aspect of the present invention, the torque motor includes position sensors for determining a position of each of the stator poles relative to the set of magnets. A controller selectively applies current to each of the coils in a selected direction based on the position of an associated stator pole.

One advantage of the present invention is that it provides maximum torque over a large angular range of rotation.

Still further advantages of the present invention will become apparent to those of ordinary skill in the art upon reading and understanding the following detailed description of the preferred embodiments.

### Brief Description of the Drawings

The invention may take form in various components and arrangements of components, and in various steps and arrangements of steps. The drawings are only for purposes of illustrating a preferred embodiment and are not to be construed as limiting the invention.
FIGURE 1 is an isometric view of a torque motor in accordance with the present invention;
FIGURES 2A-2E are cross-section views of the motor shown in FIGURE 1 representing 0°, 20°, 30°, 60°, and 90° orientations, respectively;
FIGURES 3A-3D illustrate an exemplary torque output over a 90° rotation; and
FIGURE 4 illustrates an exemplary control system for the present invention.

### Detailed Description of the Preferred Embodiments

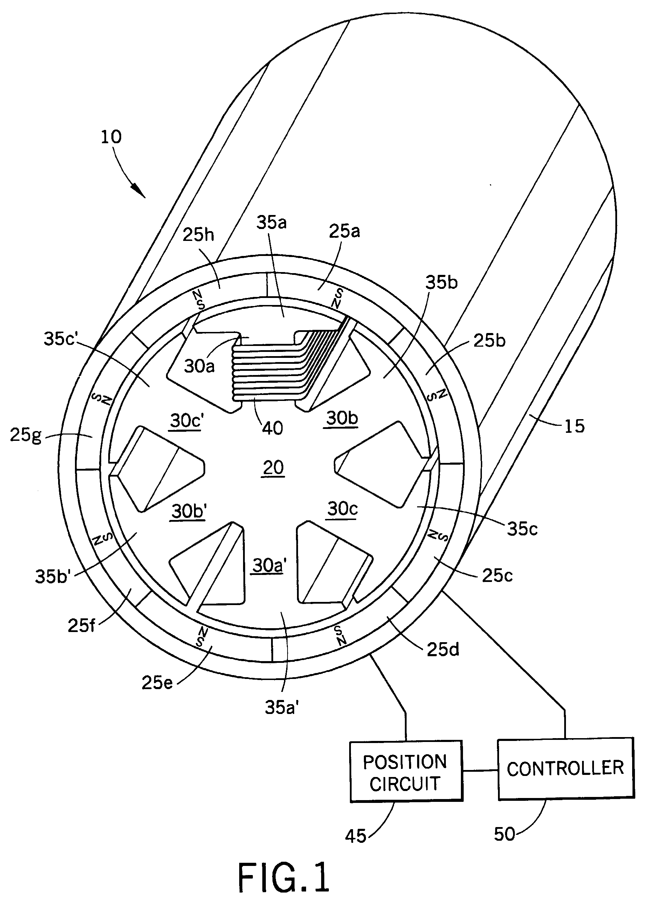

With reference to FIGURE 1, a torque motor **10** includes a rotor **15** which has a generally cylindrical form. A stator **20** is mounted within the rotor **15** such that the rotor and stator rotate relative to one another. In the preferred embodiment, the rotor **15** rotates around the stator **20**. Since the rotor **15** and stator **20** are both magnetized or magnetizable members, either one or both can be mounted for rotation. The rotor supports a magnet structure **25** formed of a plurality of magnets **25a-25h** which are mounted to an inner surface of the rotor **15.** The magnets are oriented in an alternating pole arrangement where each adjacent magnet has an opposite pole facing the stator **20.** In FIGURE 1, "N" and "S" indicate north and south magnet poles, respectively. The magnets are arranged such that at a position 180° from a magnet, the oppositely mounted magnet is arranged having the same pole facing the stator **20.** Of course, modifications to the orientation can be made.

The stator **20** includes a plurality of stems or pole roots **30 (30a-30c)** circumferentially spaced radially projecting out from the stator and, preferably, an equal number of oppositely projecting pole roots **30a'-30c'.** Of course, a different configuration of poles can be used. Each pole root includes a stator pole or pole shoe **35 (35a-35c, 35a'-35c'** at its end which is positioned adjacent the magnet structure **25.** The stator has a coil of continuous conductive material, such as a magnet wire **40** wound around each of the pole roots **30** for carrying an electric current which generates a magnetic field. For purposes of clarity, only one pole root is shown with a coil **40** wound around it.

The motor **10** is arranged with a differential between a number of magnets on the magnet structure **25** and a number of stator poles **35.** In the preferred embodiment, the motor **10** includes more magnets **25** than stator poles **35,** for example, as shown in FIGURE 1 having eight magnets and six stator poles. Of course, other ratios of magnets to poles can be used to obtain a suitable structure.

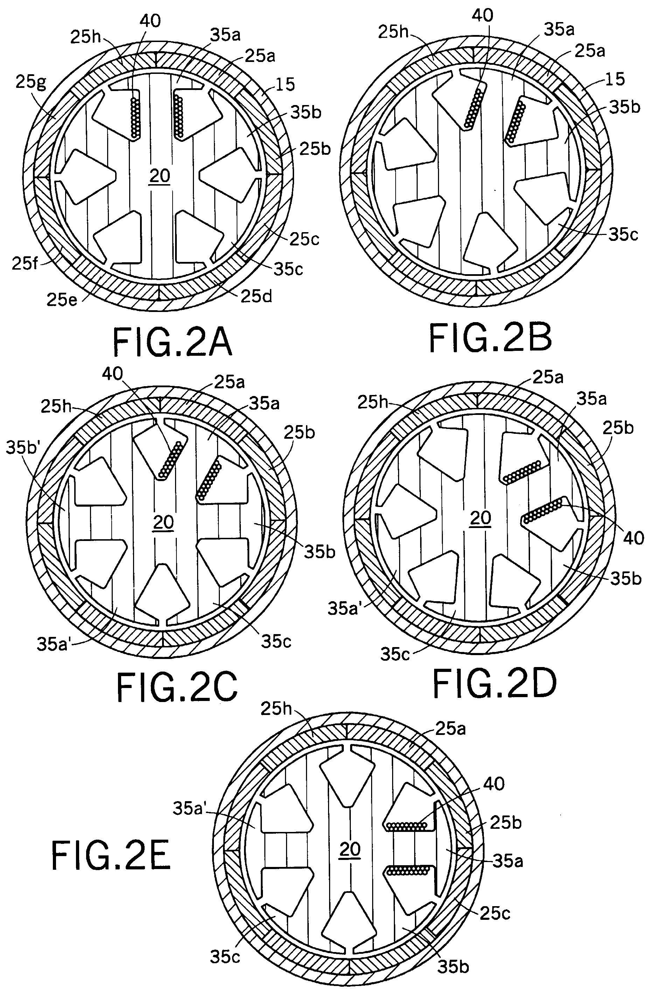

With reference to FIGURES 2A-2E, various angular orientations of the stator **20** relative to the rotor **15** are shown in cross-section. For simplicity, only FIGURE 2B is shown with cross-section markings, and one of ordinary skill will appreciate how the markings also apply to the other FIGURES. For exemplary purposes, FIGURES 2A, 2B, 2C, 2D, and 2E illustrate the stator pole **35a** at 0°, 20°, 30°, 60°, and 90° relative to the rotor **15.**

FIGURE 2A shows the stator pole **35a** at the 0° position where it substantially overlaps two magnets, namely **25a** and **25h.** By applying an appropriate electric current through the coil **40** wound around pole root **30a,** the stator and rotor orientation rotates due to magnetic forces therebetween thereby generating torque. At a 20° orientation as shown in FIGURE 2B, the pole shoe **35a** is substantially aligned with magnet **25a.** At this point, pole shoe **35a** will no longer produce torque. However, the remaining stator poles **35b** and **35c** are still oriented, relative to their adjacent magnets, such that they will produce torque. For example, pole shoe **35c** is substantially not aligned with any one magnet. Thus, the pole **35c** is still in a position to generate torque and continue the rotation of the rotor **15** relative to the stator **20.**

With reference to FIGURE 2C, pole shoe **35a** is shown in a 30° orientation relative to the rotor **15.** As is apparent from the motor **10** shown in FIGURES 2A-2E, at any given orientation of the rotor **15** and stator **20,** at least four of the pole shoes **35a-35c'** are aligned between two magnets of the magnet structure **25** having opposite poles. It is inherent that, since each pole shoe **35a-35c** has an oppositely mounted pole shoe **35a'-35c'** then at least four (4) pole shoes, for example in FIGURE 2B, **35b** and **35b' 35c** and **35c'** are each aligned to produce rotational torque. In FIGURE 2A, all poles **35a** through **35c'** are in a position to produce rotational torque.

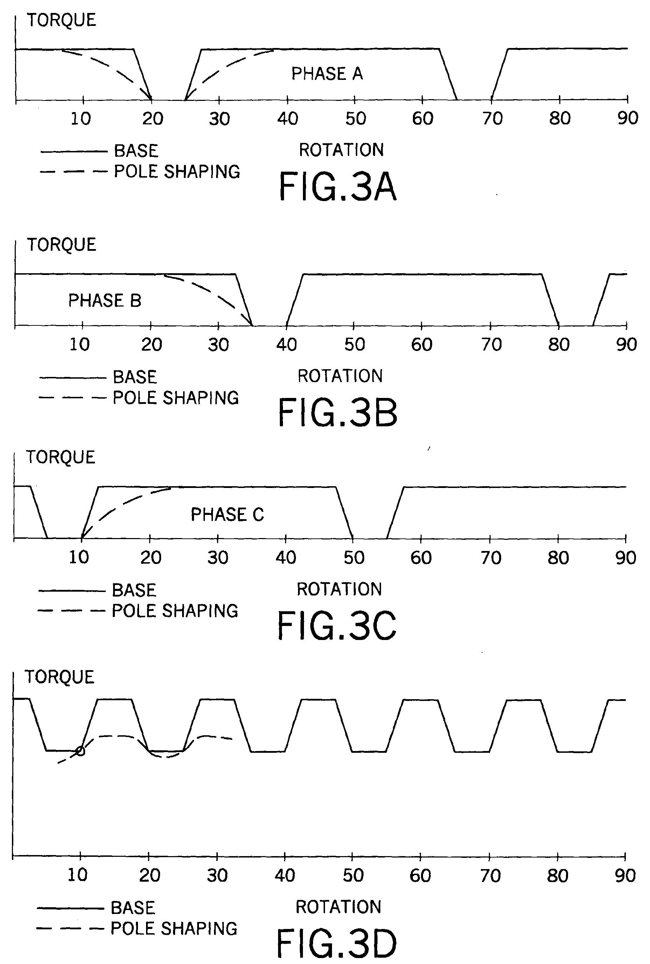

With reference to FIGURE 3, by applying appropriate currents to each wire **40** wound around the pole roots **30,** an exemplary torque output pattern is obtained as shown in FIGURES 3A-3C for the pole shoes. FIGURE 3A illustrates a torque output pattern produced by each pole shoe **35a** and **35a'.** FIGURE 3B illustrates a torque output pattern produced by each pole shoe **35b** and **35b',** while FIGURE 3C illustrates output produced by each pole shoe **35c** and **35c'.** FIGURE 3D shows a sum of the torque outputs from FIGURES 3A-3C from 0° to 90° of rotation which represents the torque output for the torque motor **10.** The dotted lines represent an idealistic output pattern if the present device included pole shaping.

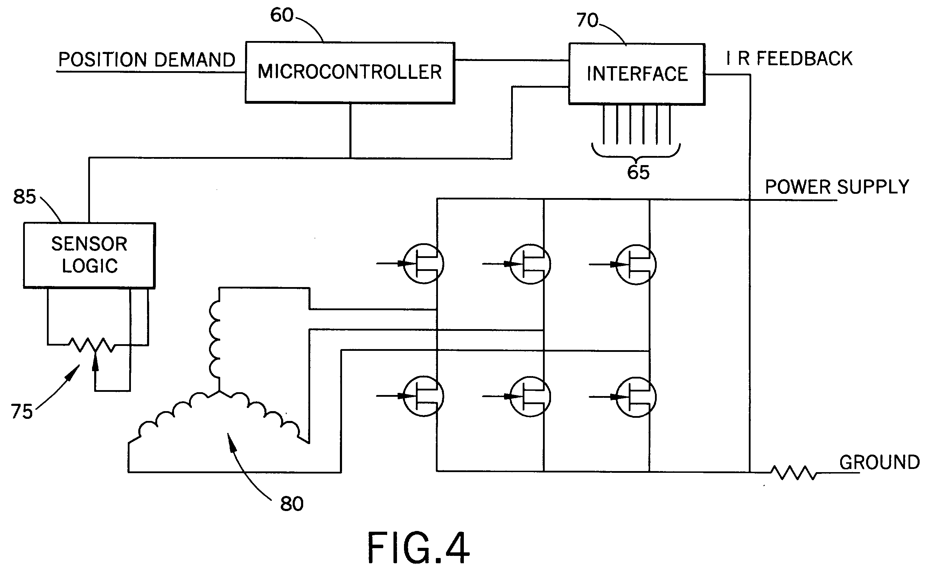

The motor **10** includes positioning circuitry **45** which determines the position of each pole shoe **35** relative to the magnets **25a-25h.** A controller **50** selectively applies an electric current to each of the wires **40** in order to generate a magnetic field to magnetize the associated pole shoe **35** to have a positive or negative pole. Each magnetized pole shoe **35** will either be attracted to or repelled from an adjacent magnet **25.** Eased on the position of each pole shoe **35** relative to magnets **25a-25h,** the controller **50** reverses the direction of the current applied to the associated wire **40** to reverse the pole of the associated pole shoe **35.** An exemplary controller is shown in FIGURE 4. In this manner, the rotor **15** and stator **20** are continuously repelled and/or attracted to one another along various points which results in rotational movement and torque generation therebetween.

With reference to FIGURE 4, an exemplary positioning circuit **45** and controller **50** for the present invention includes a microcontroller **60,** FET drivers **65,** and an interface between the microcontroller and FET drivers. The position circuitry **45** includes a potentiometer **75** which changes resistance values based on the position of an associated stator pole relative to the magnets of the rotor, and a motor winding **80.** A sensor logic **85** interprets the potentiometer readings and sends them to the microcontroller **60.**

The preferred embodiment describes an external rotor design. However, it can be easily inverted, for example, to have magnets formed in a cylinder that rotates inside the stator poles. The present invention can also apply to a disc configuration

The invention has been described with reference to the preferred embodiments. Obviously, modifications and alterations will occur to others upon a reading and understanding of this specification. It is intended to include all such modifications and alterations insofar as they come within the scope of the appended claims or the equivalents thereof.

## Claims

1. A torque motor **(10)** comprising:
a stator **(20)** including a set of stator poles **(35)** being circumferentially spaced and radially projecting from the stator **(20)**;
a coil **(40)** wound around each of the stator poles **(35)** for carrying a current which magnetizes an associated stator pole; and
a rotor **(15)** being mounted for axial rotation relative to the stator **(20)**, the rotor including a set of magnets **(25)** having a number of magnets **(25)** different than a number of poles in the set of stator poles **(35).**

2. The torque motor **(10)** as set forth in claim 1 wherein the set of magnets **(25)** defines alternating poles around the periphery of the set of stator poles **(35)** such that at any rotational orientation of the rotor **(15)** relative to the stator **(20)**, at least one stator pole of the set of stator poles **(35)** is aligned substantially adjacent to two of the alternating poles **(25)** to generate torque.

3. The torque motor **(10)** as set forth in clam 2 wherein at least four (4) stator poles **(35)** of the set of stator poles are each aligned so as to generate torque.

4. The torque motor **(10)** as set forth in claim 1 wherein the set of magnets **(25)** define alternating poles around the periphery of the set of stator poles **(35)** such that magnetic forces between the alternating poles **(25)** and the set of stator poles **(35)** provides for continuous rotation of the rotor **(15)** relative to the stator **(20)**.

5. The torque motor **(10)** as set forth in claim 1 wherein the set of magnets **(25)** and the set of stator poles **(35)** are oriented such that when a first stator pole is in a position with a first magnet from the set of magnets which prohibits rotation of the rotor **(15)** relative to the stator **(20)**, at least one second stator pole of the set of stator poles is simultaneously in a position with a second magnet so as to generate torque.

6. The torque motor **(10)** as set forth in claim 1 wherein the set of magnets **(25)** and the set of stator poles **(35)** are oriented such that when a first stator pole is substantially aligned with a first magnet, at least one second stator pole of the set of stator poles is substantially disaligned with a second magnet of the set of magnets.

7. The torque motor **(10)** as set forth in claim 1 further including:
position sensors **(75)** for determining a position of each of the stator poles **(35)** relative to the set of magnets **(25)**; and
a controller **(60)** for selectively applying current to each of the coils **(40)** in a selected direction based on the position of an associated stator pole **(35)**.

8. The torque motor **(10)** as set forth in claim 1 wherein the number of magnets **(25)** is greater than the number of stator poles **(35)**.

9. The torque motor **(10)** as set forth in claim 1 wherein the rotor **(15)** is an external rotor disposed peripherally around the set of stator poles **(35)**.

10. A torque motor **(10)** comprising:
a rotor **(15)** having a generally hollow cylindrical shape and an inner surface;
a magnet structure **(25)** mounted on the inner surface which includes a number of magnets circumferentially oriented in alternating poles;
a stator **(20)** mounted within the rotor **(15)** and adapted for rotation relative to the rotor **(15)**, the stator **(10)** including a plurality of roots **(35)** radially projecting therefrom and being circumferentially spaced, each of the roots supporting a magnetizable stator shoe, the stator **(20)** having a number of stator shoes being different from the number of magnets (25);
a coil **(40)** would around each of the plurality of roots for carrying a current which magnetizes an adjacent stator shoe;
a position sensor **(75)** for determining a position of each of the stator shoes **(35)** relative to the magnets **(25)** of the magnet structure; and
a controller **(60)** for applying a selective current to a coil **(40)** for selectively magnetizing an associated stator shoe **(35)** based on a position of the associated stator shoe determined by the position sensor **(75)**, the rotor **(15)** and stator **(20)** generating torque by rotating relative to each other caused by magnetic forces between the magnets **(25)** and the stator shoes **(35)**.

11. The torque motor **(10)** as set forth in claim 10 wherein the magnets **(25)** and the stator shoes **(35)** are oriented such that when a first stator shoe is substantially aligned with a first magnet of the magnet structure, at least one second stator shoe is substantially disaligned with a second magnet of the magnet structure.

12. The torque motor **(10)** as set forth in claim 10 wherein the number of magnets **(25)** is greater than the number of stator shoes **(35)**.

13. The torque motor **(10)** as set forth in claim 10 wherein at any rotational orientation of the rotor **(15)** and stator **(20)**, at least two stator shoes **(35)** are disaligned with adjacent magnets **(25)** of the magnet structure such that torque is generated.

14. A torque motor **(10)** comprising:
a first magnetizable member including first magnetic poles; and
a second magnetizable member including second magnetic poles, the first and second magnetizable members being mounted for rotation relative to each other caused by rotational forces between the first and second magnetic poles, the first magnetic poles having a different number of poles than the second magnetic poles.

15. The torque motor **(10)** as set forth in claim 14 wherein:
the first magnetizable member is a stator **(20)** including a plurality of stator poles **(35)** which form the first magnetic poles;
the second magnetizable member is a rotor **(15)** rotatably mounted relative to the stator **(20)** and including a plurality of magnets **(25)** arranged by alternating poles which form the second magnetic poles; and
a number of the plurality of magnets **(25)** being greater than a number of the plurality of stator poles **(35)**.

16. The torque motor **(10)** as set forth in claim 15 wherein the plurality of stator poles **(35)** and the plurality of magnets **(25)** are arranged relative to each other such that at any rotational orientation of the rotor **(15)** relative to the stator **(20)**, at least one stator pole **(35)** of the plurality of stator poles is aligned substantially adjacent to two of the plurality of magnets **(25)** to generate torque.

17. The torque motor **(10)** as set forth in claim 15 wherein the rotor **(15)** is external to the stator **(20)**.

18. The torque motor **(10)** as set forth in claim 15 wherein the plurality of stator poles **(35)** and the plurality of magnets **(25)** are arranged relative to each other such that at any rotational orientation of the rotor **(15)** relative to the stator **(20)**, at least half of the plurality of stator poles **(35)** are aligned relative to the plurality of magnets **(25)** to generate torque.

19. The torque motor **(10)** as set forth in claim 14 wherein both the first magnetizable member and the second magnetizable member are mounted for axial rotation relative to each other.

20. The torque motor **(10)** as set forth in claim 14 wherein the first magnetic poles having a greater number of poles than the second magnetic poles.
